# FASCICULE DE BREVET EUROPEEN

(11) **EP 2 195 495 B1**
(45) Date de publication et mention de la délivrance du brevet: **14.03.2018**
(21) Numéro de dépôt: 08804981.2
(22) Date de dépôt: 01.10.2008
(51) Int. Cl.: H02S 20/23

(54) **DISPOSITIF SUPPORT DE PANNEAUX PHOTOVOLTAÏQUES SUR UNE TOITURE, COMPRENANT DES MOYENS SUPPORTS AUTORISANT UNE CIRCULATION D'AIR ENTRE UN PLAN DE BASE ET LE PANNEAU PHOTOVOLTAÏQUE**
VORRICHTUNG ZUR BEFESTIGUNG VON PV-MODULEN AUF EINEM DACH MIT BEFESTIGUNGSMITTELN FÜR DEN DURCHLASS EINES LUFTSTROMS ZWISCHEN EINER GRUNDFLÄCHE UND DEM PV-MODUL
DEVICE FOR HOLDING PHOTOVOLTAIC PANELS ON A ROOF, INCLUDING HOLDING MEANS ALLOWING AN AIR FLOW BETWEEN A BASE PLANE AND THE PHOTOVOLTAIC PANEL

(30) Priorité: 02.10.2007 FR 0706887
(43) Date de publication de la demande: 16.06.2010
(73) Titulaire: T-Solaris SAS, 16490 Pleuville (FR)
(72) Inventeur: Saillard, Guy, 13600 La Ciotat (FR)
(74) Mandataire: Novagraaf Technologies
(86) Numéro de dépôt international: PCT/EP2008/063192
(87) Numéro de publication internationale: WO 2009/043894

(56) Documents cités:
- EP-A- 1 020 929
- EP-A- 1 071 137
- DE-U1- 20 104 774
- DE-U1-202006 012 708
- JP-A- 2002 115 372
- US-A- 6 119 415
- US-A1- 2003 154 680
- US-B1- 6 201 179

## Description

Le domaine de l'invention est celui des techniques d'installation de panneaux solaires sur des toitures. Plus précisément, l'invention concerne un dispositif de montage d'un ou de plusieurs panneaux photovoltaïques sur une toiture, que ce soit de façon intégrée à la toiture ou de façon rapportée sur une toiture existante. La présente invention a également pour objet un ensemble comprenant un dispositif support équipé d'un panneau photovoltaïque, et une toiture comprenant au moins un tel ensemble.

Dans le domaine de l'invention, l'installation de panneaux photovoltaïques, en particulier de panneaux photovoltaïques, représente une activité croissante.

On distingue deux types de montage de panneaux photovoltaïques sur une toiture :
- les panneaux photovoltaïques à poser en superposition sur une toiture ;
- les panneaux photovoltaïques fixés sur une charpente en lieu et place du matériau habituel de toiture, ou en combinaison avec celui-ci.

Lorsque les panneaux sont destinés à être posés en superposition sur une toiture, ceux-ci sont généralement montés dans un cadre par exemple en aluminium, ce dernier étant destiné à être fixé sur la toiture par différents moyens, tels que :
- des sabots pour une toiture en tôle ondulée ;
- des goujons pour une fixation sur des bagues métalliques ;
- des clips pour une fixation sur une toiture en zinc ;
- des crochets pour une fixation sur les tuiles d'une toiture ;
- ...

Pour les panneaux destinés à être fixés en lieu en place du matériau habituel de toiture, les panneaux sont également montés dans un cadre, ces derniers étant destinés à être montés directement sur la charpente de la toiture par exemple à l'aide de lisses. Dans ce cas, le montage du panneau implique le recours à une quincaillerie relativement importante, tels que des patins de fixation, des lisses, des bavettes, des closoirs, des joints, des parcloses, des bandes de rive, et toute une visserie associée.

Dans l'un ou l'autre cas, on comprend que le montage de panneaux photovoltaïques en toiture implique la mise en oeuvre de nombreuses pièces de fixation, et nécessite le recours à des professionnels spécialisés.

En outre, les techniques actuelles associent les panneaux à un cadre métallique, composé de profilés. Or, la réalisation de ces cadres s'avère relativement coûteuse, ceci d'autant plus qu'il est souvent nécessaire de prévoir différents profilés en fonction des dimensions et/ou de la conception des panneaux photovoltaïques.

Par ailleurs, l'ensemble formé par le panneau photovoltaïque et le cadre métallique présente un poids conséquent, ce qui tend à nuire à la facilité de manipulation de l'ensemble, en particulier lors des opérations de montage en toiture.

Par ailleurs, les techniques actuelles négligent le plus souvent un paramètre important ayant un impact sur le fonctionnement optimisé et pérenne des panneaux photovoltaïques, s'agissant de l'échauffement des cellules qui les composent. En effet, l'échauffement trop important du panneau entraîne un risque d'endommagement des cellules photovoltaïques et/ou de réduction de leur rendement. Or, par nature, ces panneaux sont exposés à des ensoleillements susceptibles de générer de fortes chaleurs au niveau des toitures sur lesquelles sont montés les panneaux photovoltaïques.

Les documents EP1020929A et EP1071137A contiennent des informations concernant l'arrière-plan technologique.

L'invention a notamment pour objectif de pallier ces inconvénients de l'art antérieur.

Plus précisément, l'invention a pour objectif de proposer une technique de fixation de panneaux photovoltaïques en toiture, qui soit aisée, rapide, et qui assure la pérennité des panneaux photovoltaïques.

En ce sens, l'invention a pour objectif de fournir une telle technique qui évite, ou à tout le moins limite, le risque d'endommagement des cellules des panneaux photovoltaïques dû à un échauffement trop important.

L'invention a également pour objectif de fournir une telle technique qui permette d'envisager une réduction du nombre de pièces de quincaillerie utilisées pour fixer les panneaux sur une toiture.

L'invention a aussi pour objectif de fournir un ensemble de montage d'un panneau photovoltaïque présentant un poids réduit par rapport aux ensembles de l'art antérieur.

Un autre objectif de l'invention est de fournir un tel ensemble qui soit peu coûteux à réaliser.

Encore un autre objectif de l'invention est de fournir une telle technique qui permette, sur la base d'un même principe, de rapporter des panneaux sur des toitures existantes ou d'intégrer ceux-ci en lieu et place des matériaux de couverture actuels.

L'invention a encore pour objectif de fournir une telle technique qui soit simple de conception et facile à mettre en oeuvre.

Ces objectifs, ainsi que d'autres qui apparaîtront par la suite, sont atteints grâce à l'invention qui a pour objet un dispositif support d'au moins un panneau photovoltaïque sur une toiture, selon la revendication 1. Ainsi, l'invention propose une approche nouvelle du montage des panneaux photovoltaïques en toiture, se distinguant notablement des ensembles proposés par l'art antérieur selon lequel les panneaux sont intégrés à un cadre métallique. De cette façon, et comme cela va apparaître plus clairement par la suite, l'assemblage des panneaux photovoltaïques sur leur support peut être réalisé simplement et aisément, ceci en limitant notablement les coûts de fabrication en comparaison des coûts de fabrication des cadres constitués de profilés métalliques.

De plus, l'invention permet de préserver les cellules composant le panneau photovoltaïque vis-à-vis des échauffements trop importants, ceci en permettant une circulation d'air entre le panneau et son support, assurant ainsi une ventilation du panneau.

Par ailleurs, un dispositif support selon l'invention peut aisément être adapté pour une fixation en superposition sur une toiture ou une fixation en lieu et place des matériaux de couverture, ceci en modifiant la conception des ailes de fixation.

On note que le terme « toiture » englobe tant les toitures de maison d'habitation ou de bâtiments que celles dites «toiture-terrasse ».

Avantageusement, le dispositif support est constitué d'une pièce monobloc réalisée en un matériau composite et regroupant au moins ledit plan de base, lesdites ailes et lesdits moyens supports, cette pièce monobloc étant préférentiellement réalisée en un mélange de fibres de verre et de résine polyester.

De cette façon, le dispositif support peut être fabriqué en série, par exemple par moulage, ce qui ne nécessite aucune opération d'assemblage du dispositif support en tant que tel. Les coûts de fabrication peuvent ainsi être réduits comparés aux techniques antérieures nécessitant la réalisation et l'assemblage de profilés pour constituer un cadre.

Selon une solution avantageuse, lesdits moyens supports comprennent :
- au moins deux bossages longitudinaux s'étendant au voisinage desdites ailes ;
- au moins deux bossages transversaux, dont l'un dit bossage d'extrémité inférieure et l'autre dit bossage d'extrémité supérieure.

De cette façon, les bossages longitudinaux et/ou les bossages transversaux définissent un plan d'appui sur lequel le panneau photovoltaïque peut être fixé, par exemple par simple collage.

Selon une caractéristique avantageuse, lesdits bossages longitudinaux s'étendent jusqu'au bossage transversal d'extrémité supérieure, au moins l'un desdits bossages longitudinaux présentant une réduction de section au voisinage dudit bossage transversal d'extrémité supérieure pour ménager un passage d'air.

Selon encore une autre caractéristique avantageuse, au moins l'un desdits bossages longitudinaux est écarté dudit bossage transversal d'extrémité inférieure.

Ainsi, une circulation d'air est favorisée entre le volume s'étendant entre le panneau photovoltaïque et le plan de base d'une part, et l'extérieur de ce volume d'autre part, ceci par l'un et/ou l'autre des passages ménagés en partie supérieure ou inférieure du support. Bien sûr, la présence de deux passages distincts pour l'air favorise la circulation d'air à l'intérieur du volume entre le panneau photovoltaïque et le panneau de base, l'air extérieur à ce volume pouvant circuler d'un passage à l'autre. Le positionnement écarté d'au moins un bossage longitudinal par rapport au bossage transversal d'extrémité inférieure permet de former un passage d'air en partie inférieure tout en conservant un maximum de portée pour l'assemblage du panneau photovoltaïque sur ledit bossage transversal. Par ailleurs, le passage d'air formé par un tel positionnement écarté permet l'écoulement d'eau éventuellement présente au niveau du plan de base, en particulier de l'eau de condensation.

Préférentiellement, lesdits moyens supports comprennent au moins un bossage transversal intermédiaire entre lesdits bossages transversaux d'extrémité inférieure et d'extrémité supérieure.

Ainsi, le panneau photovoltaïque (dont la longueur dépasse généralement 1 mètre) est supporté rigidement et efficacement sur toute sa longueur, évitant aux panneaux de courber sous l'effet de son poids et/ou de la chaleur.

Dans ce cas, ledit bossage transversal intermédiaire présente avantageusement au moins un évidement formant un passage d'air.

Le bossage transversal intermédiaire ainsi constitué ne forme pas obstacle à la circulation d'air entre les deux parties du volume qu'il sépare, ces deux parties s'étendant entre le panneau photovoltaïque et le plan de base.

Au contraire, il permet, voire favorise, la circulation d'air entre les passages ménagés au voisinage du bossage transversal d'extrémité supérieure et du bossage transversal d'extrémité inférieure.

Selon une solution avantageuse, ledit bossage transversal d'extrémité inférieure présente une aile de recouvrement destinée à venir en recouvrement d'un rebord supérieur d'un autre dispositif support.

Cette caractéristique s'avère particulièrement avantageuse dans une application du dispositif selon l'invention dans laquelle l'ensemble formé par le dispositif et le panneau sont intégrés dans la toiture en lieu et place des matériaux de couverture habituels. En effet, le recouvrement partiel des dispositifs entre eux assure le ruissellement d'eau d'un dispositif à un autre (disposés l'un au-dessus de l'autre), ceci de façon étanche.

Selon un autre mode de réalisation, le dispositif support comprend un rebord supérieur, disposé transversalement au dessus du bossage transversal supérieur, ledit bossage transversal d'extrémité inférieure étant apte à venir en recouvrement du rebord supérieur d'un autre dispositif support. Selon une solution avantageuse, lesdits bossages portent au moins un cordon s'étendant sur la longueur desdits bossages.

De cette façon, les opérations de fixation des panneaux photovoltaïques sur les dispositifs sont facilitées, en particulier lorsque les panneaux photovoltaïques sont collés sur les dispositifs supports, les cordons favorisant le positionnement correct et/ou le maintien de la colle sur le dispositif pendant le temps de prise de la colle.

Avantageusement, lesdites ailes et lesdits bossages longitudinaux ménagent deux à deux une gouttière.

Le ruissellement des eaux de pluie est ainsi guidé jusqu'à une gouttière classique installée en bordure inférieure des toitures.

Avantageusement, ledit rebord supérieur et le bossage d'extrémité supérieure ménagent une gouttière transversale débouchant sur les deux gouttières ménagées par lesdites ailes de fixation et lesdits bossages longitudinaux.

Selon encore une autre caractéristique avantageuse de l'invention, le dispositif comprend au moins une pièce de recouvrement destinée à coiffer deux ailes voisines de deux dispositifs placés l'un à côté de l'autre. Une telle pièce de recouvrement exerce ainsi une double fonction :
- celle d'assurer le blocage entre et sur la toiture de deux dispositifs supports adjacents ;
- celle d'assurer l'étanchéité entre deux dispositifs supports adjacents.

De plus, ces pièces tendent à améliorer l'aspect esthétique de l'ensemble des dispositifs supports une fois ceux-ci installés sur une toiture.

La présente invention a également pour objet un ensemble caractérisé en ce qu'il comprend
- un dispositif support d'un panneau photovoltaïque comportant
   - un plan de base s'étendant entre deux ailes de fixation ;
   - des moyens supports d'un panneau photovoltaïque s'étendant en élévation par rapport audit plan de base, et comprenant au moins deux bossages transversaux, dont l'un dit bossage d'extrémité inférieure et l'autre dit bossage d'extrémité supérieure, et au moins deux bossages longitudinaux s'étendant au voisinage desdites ailes, lesdits bossages longitudinaux et transversaux définissant un plan d'appui sur lequel un panneau photovoltaïque peut être fixé, et
- un panneau photovoltaïque fixé sur les bossages longitudinaux et transversaux, de sorte qu'un volume d'air est ménagé entre ledit plan de base et ledit panneau photovoltaïque, lesdits moyens supports présentant des moyens d'entrée/sortie d'air permettant une circulation d'air dans ledit volume d'air.

L'invention propose ainsi un ensemble préfabriqué, appelé également module ou élément de toiture photovoltaïque, comprenant un dispositif support équipé d'un panneau photovoltaïque. Le dispositif support avec ses bossages longitudinaux et transversaux permet l'assemblage d'un panneau photovoltaïque, sans que ce dernier soit équipé d'un cadre support, le panneau pouvant être simplement constitué d'une plaque, par exemple une plaque de verre, sur laquelle est assemblé un film de cellules photovoltaïque. Le panneau photovoltaïque fixé sur les bossages longitudinaux et transversaux crée un caisson creux ayant un module d'inertie important qui présente une bonne résistance à la flexion et à la torsion.

Selon un mode de réalisation, le panneau photovoltaïque comprend un film de cellules photovoltaïques assemblé à au moins une plaque, le panneau photovoltaïque reposant par sa plaque sur les bossages longitudinaux et bossages transversaux, ledit panneau photovoltaïque étant dépourvu de cadre support pour son assemblage sur le dispositif support. Selon un mode de réalisation, le panneau photovoltaïque comprend un film de cellules photovoltaïques entre deux plaques, par exemple en verre, ou un film de cellules photovoltaïques assemblé à une seule plaque.

Avantageusement, ledit ensemble comprend un dispositif support tel que décrit précédemment.

La présente invention a également pour objet une toiture caractérisée en ce qu'elle comprend au moins un ensemble tel que défini précédemment, ledit ensemble étant disposé entre deux chevrons et fixé par les deux ailes de fixation de son dispositif support auxdits chevrons.

Selon une particularité, la toiture comprend au moins deux ensembles placés en rangée l'un à côté de l'autre et au moins une pièce de recouvrement destinée à coiffer les deux ailes voisines des dispositifs supports des deux ensembles montées sur le même chevron.

Selon une autre particularité, la toiture comprend au moins deux ensembles placés en colonne entre les deux mêmes chevrons, un premier ensemble étant placé au dessus d'un deuxième ensemble, le bossage transversal d'extrémité inférieure du dispositif support du premier ensemble recouvrant le rebord supérieur du dispositif support du deuxième ensemble.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un dispositif support d'un panneau photovoltaïque selon l'invention ;
- la figure 2 est une vue en coupe transversale d'un ensemble formé par l'assemblage d'un dispositif support selon l'invention et d'un panneau photovoltaïque ;
- la figure 3 est une vue en coupe de deux dispositifs supports adjacents et d'une pièce de recouvrement ;
- la figure 4 est une vue en coupe d'un assemblage de dispositifs supports selon l'invention sur un chevron de charpente ; et,
- La figure 5 est une vue en coupe longitudinale de deux dispositifs supports adjacents d'une même colonne.

Tel qu'indiqué précédemment, le principe de l'invention réside dans le fait de proposer un dispositif support de panneaux photovoltaïques comprenant des moyens supports d'au moins un panneau photovoltaïque conçu de telle sorte que le panneau photovoltaïque délimite avec un plan de base du dispositif support un caisson à l'intérieur duquel l'air peut circuler.

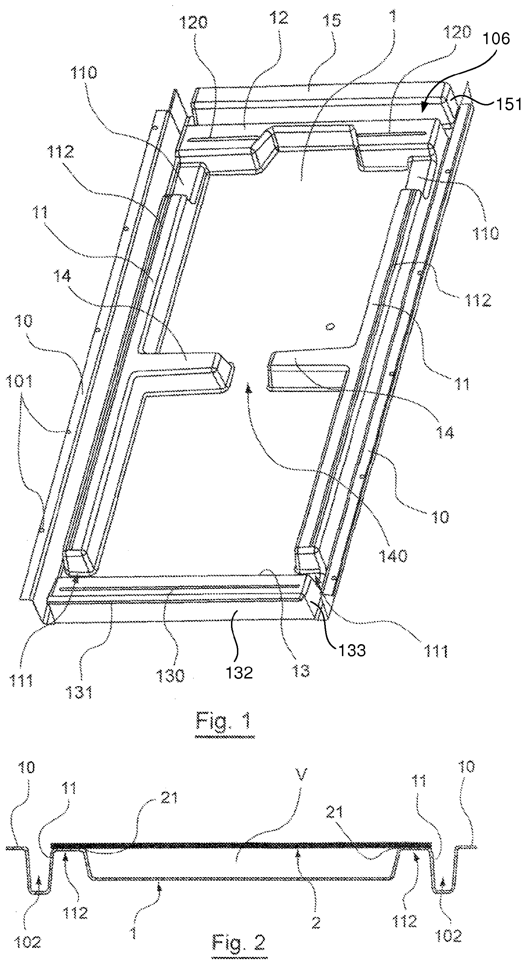

La figure 1 illustre un dispositif support selon l'invention.

Tel que cela apparaît sur cette figure, un dispositif support selon l'invention comprend :
- un plan de base 1 ;
- deux ailes de fixation 10 entre lesquelles s'étend le plan de base ;
- des moyens supports 11, 12, 13, 14 sur lesquels un ou plusieurs panneaux photovoltaïques sont destinés à être rapportés, ces moyens supports s'étendant en élévation par rapport au plan de base 1.

On note en référence à la figure 2 que, les moyens supports s'étendant en élévation par rapport au plan de base 1, le panneau photovoltaïque 2 une fois rapporté sur le support est distant du plan de base 1 de telle sorte que l'ensemble formé par le dispositif support et le panneau photovoltaïque constitue une sorte de caisson creux délimitant un volume d'air V entre le plan de base et le panneau photovoltaïque.

De plus, selon le principe de l'invention, les moyens supports sont réalisés de façon à ménager une entrée/sortie d'air permettant une circulation d'air dans le volume V.

Selon le présent mode de réalisation, les moyens supports comprennent :
- deux bossages longitudinaux 11 s'étendant au voisinage des ailes de fixation 10 ;
- un bossage transversal d'extrémité supérieure 12 ;
- un bossage transversal d'extrémité inférieure 13 ;
- un bossage transversal intermédiaire 14, s'étendant sensiblement à mi-distance entre le bossage transversal d'extrémité supérieure et le bossage d'extrémité inférieure.

Tel que cela apparaît, les moyens permettant l'entrée d'air dans le volume V et/ou la sortie d'air à partir de celui-ci sont constitués par :
- une réduction 110 de la section des bossages longitudinaux 11, les bossages 11 s'étendant jusqu'au bossage transversal d'extrémité supérieure 12 et étant reliés à celui-ci par l'intermédiaire des réductions de sections 110 ;
- des passages 111 au voisinage du bossage transversal d'extrémité inférieure 13, ces passages étant obtenus du fait de la position écartée des extrémités inférieures des bossages longitudinaux par rapport au bossage transversal d'extrémité inférieure.

La formation de ces passages d'air à la liaison des bossages longitudinaux et des bossages transversaux permet de conserver pour l'assemblage du panneau photovoltaïque un maximum de portée sur les bossages transversaux.

De plus, le bossage transversal intermédiaire 14 présente un évidement 140 délimitant un passage d'air à l'intérieur du volume V, permettant une circulation d'air entre les passages d'air 110 aux passages d'air 111, ou inversement.

Bien entendu, on comprend que les parties supérieures de chacun des bossages 11, 12, 13, 14 s'inscrivent dans un même plan (à l'exception de cordons explicités ci-après) constituant le plan d'appui pour le panneau photovoltaïque 2.

On note que chacun des bossages 11, 12, 13, 14 ainsi que le rebord supérieur 15, présentent tous une base de largeur légèrement supérieure à celle de leur extrémité supérieure, ceci favorisant le démoulage du dispositif.

De plus, le dispositif présente à son extrémité supérieure un rebord 15 (ici distinct du bossage transversal d'extrémité supérieure 12) et, parallèlement, le bossage transversal d'extrémité inférieure porte une aile de recouvrement 131 destinée à venir chevaucher le rebord supérieur 15 d'un deuxième dispositif support selon l'invention.

Selon un autre mode de réalisation, le bossage transversal d'extrémité inférieure 13 et le rebord supérieur 15 sont définis de sorte que le bossage transversal d'extrémité inférieure est apte à venir s'emboîter sur le rebord supérieur d'un autre dispositif support.

Par ailleurs, chacun des bossages 11, 12, 13 porte un cordon, respectivement 112, 120, 130, s'étendant longitudinalement sur le bossage correspondant.

En référence à la figure 2, l'assemblage du panneau photovoltaïque 2 sur le dispositif support est réalisé par collage, un dépôt de colle 21 étant réalisé sur la partie supérieure des bossages, les cordons 112 (et, selon le même principe, les cordons 120 et 130 respectivement des bossages 12 et 13) formant une butée pour la colle 21. On note que les cordons 112, 120 et 130 présentent une épaisseur correspondant sensiblement à l'épaisseur de la colle 21 rapportée sur les bossages.

Selon une autre caractéristique de l'invention, le dispositif support est conçu de façon à présenter latéralement des gouttières 102 s'étendant chacune entre un bossage longitudinal et l'aile de fixation correspondante. On note que le fond des gouttières 102 s'étend à un niveau plus profond que le plan de base 1, évitant ou limitant le risque d'écoulement d'eau au niveau du plan de base.

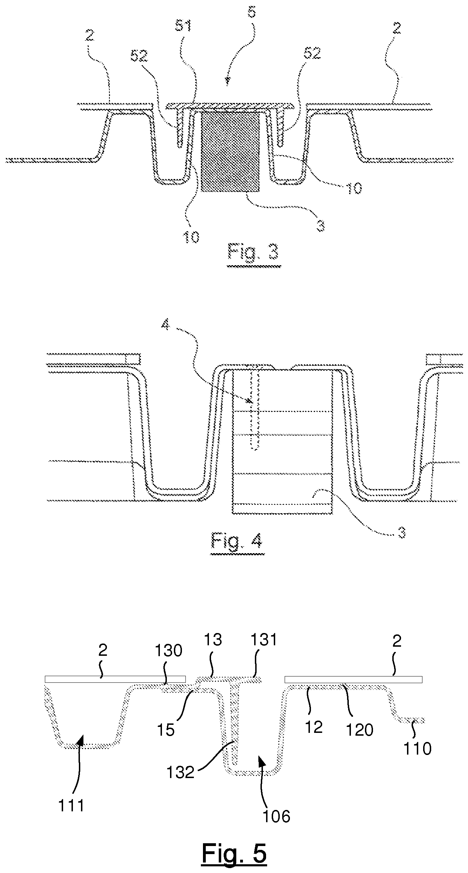

Par ailleurs, en référence aux figures 1 et 5, le dispositif support est conçu de façon à présenter entre le bossage transversal d'extrémité supérieure 12 et le rebord supérieur 15 une gouttière transversale 106 supérieure, ladite gouttière transversale s'étendant d'une gouttière latérale 102 à l'autre, et son fond est disposé sensiblement au même niveau que les fonds desdites gouttières latérales.

En référence à la figure 3, une fois le dispositif support selon l'invention, fixé l'un à côté de l'autre sur un même chevron 3, il est prévu de rapporter une pièce de recouvrement 5 assurant la finition et l'étanchéité du montage. Tel que cela apparaît, cette pièce de recouvrement 5 comprend une partie supérieure plane 51 à partir de laquelle s'étendent deux ailes 52 écartées l'une de l'autre de telle sorte que la pièce puisse venir coiffer deux ailes de fixation 10 montées sur un même chevron 3.

Cette pièce 5 présente une longueur correspondante à celle des dispositifs supports sur lesquels elle est rapportée et fixée.

Selon une solution préférée, le dispositif support selon l'invention telle que décrite précédemment est constitué d'une pièce monobloc regroupant l'ensemble des parties constitutives (plan de base, bossage, aile de fixation, ...) constituant le dispositif. La pièce monobloc constituant le dispositif support est réalisée en un matériau composite, constitué préférentiellement d'un mélange de fibres de verre et de résine polyester. Le dispositif ainsi réalisé est teinté dans la masse à la couleur du panneau solaire, et traité de façon à lui procurer une résistance efficace vis-à-vis des ultraviolets.

A titre indicatif, un dispositif support selon l'invention présente une largeur de 700 mm et une longueur de 1300 mm.

Un dispositif support selon l'invention peut être posé sur les chevrons d'une charpente bois ou métallique. Le chevronnage doit alors être vertical et pourra présenter des dimensions classiques (soit une section de 50 mm x 75 mm). Bien entendu, l'entraxe du chevronnage doit impérativement correspondre à la largeur du dispositif support selon l'invention.

L'installation de dispositif support selon l'invention est réalisée de la façon suivante.

L'installation débute par la fixation d'un dispositif en bas de la toiture, et à l'extrémité latérale de celle-ci. Une fois le panneau positionné, les ailes de fixation sont fixées sur les chevrons 3, à l'aide de vis 4 (figure 4), par exemple des vis d'une longueur de 40 mm, à tête fraisée et en acier galvanisé. Le vissage est réalisé au niveau des trous 101 prévus à cet effet sur chacune des ailes de fixation 10 (ces trous étant par exemple au nombre de cinq par ailes de fixation).

L'installateur choisit ensuite la manière de poser les panneaux suivants : soit il procède par rangée, soit il procède par colonne (il n'y a pas d'ordre particulier à respecter).

S'agissant de la pose en colonne des panneaux, le positionnement des dispositifs les uns par rapport aux autres est réalisé de telle sorte que l'aile de recouvrement 131 portée par le bossage transversal d'extrémité inférieure 130 d'un premier dispositif vienne en recouvrement du rebord supérieur 15 d'un deuxième dispositif placé en dessous du premier dispositif. Selon un autre mode de réalisation illustré à la figure 5, la pose en colonne est réalisée de sorte que le bossage transversal d'extrémité inférieure 13 d'un premier dispositif vient en recouvrement du rebord supérieur 15 d'un deuxième dispositif placé en dessous du premier dispositif, la paroi verticale extérieure 132 dudit bossage transversal d'extrémité inférieure étant disposée dans la gouttière transversale 106 du deuxième dispositif, et les parois latérales 151 du rebord supérieur 15 venant s'emboîter entre les parois latérales 133 du bossage transversal d'extrémité inférieure. Dans ce mode de réalisation, l'aile de recouvrement 131 vient recouvrir partiellement la gouttière transversale du deuxième dispositif.

Une fois l'ensemble des dispositifs installés (ou au fur et à mesure de leur installation), les pièces de recouvrement 5 sont installées de façon à coiffer deux ailes de fixation adjacentes. La fixation par vissage de ces pièces de recouvrement nécessite le recours des rondelles en caoutchouc (pour assurer l'étanchéité du vissage) sur chacune desquelles on rajoute une rondelle métallique en acier inoxydable.

En référence à la figure, on note que, une fois les dispositifs installés et les pièces de recouvrement mises en place, on obtient une planéité d'ensemble, procurant, pour un observateur, des très bonnes qualités esthétiques à la toiture ainsi réalisée.

## Revendications

1. Dispositif support d'au moins un panneau photovoltaïque (2) sur une toiture comprenant :
- un plan de base (1) s'étendant entre deux ailes de fixation (10) ;
- des moyens supports (11), (12), (13), (14) dudit ou desdits panneaux photovoltaïques (2) s'étendant en élévation par rapport audit plan de base (1) de façon à ménager un volume d'air (V) entre ledit plan de base (1) et ledit ou lesdits panneaux photovoltaïques (2), lesdits moyens supports (11), (12), (13), (14) présentant des moyens d'entrée/sortie d'air (110), (111) permettant une circulation d'air dans ledit volume d'air (V), lesdits moyens supports comprenant
- au moins deux bossages transversaux (12), (13), dont l'un dit bossage d'extrémité inférieure (13) et l'autre dit bossage d'extrémité supérieure (12), et
- au moins deux bossages longitudinaux (11) s'étendant au voisinage desdites ailes (10),
le dispositif étant **caractérisé en ce qu'**au moins l'un desdits bossages longitudinaux est écarté dudit bossage transversal d'extrémité inférieure (13) pour ménager un premier passage d'air (111) en partie inférieure du dispositif support, un deuxième passage d'air étant ménagé de manière analogue en partie supérieure du support, lesdits moyens d'entrée/sortie d'air comprenant lesdits passages d'air (111),
les bossages longitudinaux et/ou les bossages transversaux définissant un plan d'appui sur lequel le panneau photovoltaïque peut être fixé,
lesdites ailes (10) et lesdits bossages longitudinaux (11) ménageant deux à deux une gouttière (102).

2. Dispositif support d'au moins un panneau photovoltaïque selon la revendication 1, **caractérisé en ce que** lesdits bossages longitudinaux (11) s'étendent jusqu'au bossage transversal d'extrémité supérieure (12), au moins l'un desdits bossages longitudinaux (11) présentant une réduction de section au voisinage dudit bossage transversal d'extrémité supérieure (12) pour ménager un passage d'air (110) en partie supérieure du dispositif support, lesdits moyens d'entrée/sortie d'air comprenant ledit passage d'air (110).

3. Dispositif support d'au moins un panneau photovoltaïque selon la revendication 1 ou 2, **caractérisé en ce qu'**il est constitué d'une pièce monobloc réalisée en un matériau composite et regroupant au moins ledit plan de base (1), lesdites ailes (10) et lesdits moyens supports (11), (12), (13), (14).

4. Dispositif support d'au moins un panneau photovoltaïque selon la revendication 3, **caractérisé en ce qu'**il est réalisé en un mélange de fibres de verre et de résine polyester.

5. Dispositif support d'au moins un panneau photovoltaïque selon l'une quelconque des revendications 1 à 4, **caractérisé en ce que** lesdits moyens supports comprennent au moins un bossage transversal intermédiaire (14) entre lesdits bossages transversaux (13), (12) d'extrémité inférieure et d'extrémité supérieure.

6. Dispositif support d'au moins un panneau photovoltaïque selon la revendication 5, **caractérisé en ce que** ledit bossage transversal intermédiaire (14) présente au moins un évidement (140) formant un passage d'air.

7. Dispositif support d'au moins un panneau photovoltaïque selon l'une quelconque des revendications 1 à 6, **caractérisé en ce que** lesdits bossages (11), (12), (13) portent au moins un cordon (112), (120), (130) s'étendant sur la longueur desdits bossages.

8. Dispositif support d'au moins un panneau photovoltaïque selon l'une quelconque des revendications 1 à 7, **caractérisé en ce qu'**il comprend un rebord supérieur (15), ledit bossage transversal d'extrémité inférieure (13) étant apte à venir en recouvrement du rebord supérieur (15) d'un autre dispositif support disposé sur la toiture sur une même colonne de dispositifs support que ledit dispositif support.

9. Dispositif support d'au moins un panneau photovoltaïque selon la revendication 8, **caractérisé en ce que** ledit rebord supérieur (15) et le bossage transversal (12) d'extrémité supérieure ménagent une gouttière transversale (106) débouchant sur les deux gouttières (102) ménagées par lesdites ailes de fixation (10) et lesdits bossages longitudinaux (11).

10. Ensemble **caractérisé en ce qu'**il comprend
- un dispositif support d'un panneau photovoltaïque (2) selon l'une des revendications 1 à 9, et
- un panneau photovoltaïque (2) fixé sur les bossages longitudinaux (11) et transversaux (12), (13).

11. Ensemble selon la revendication 10, **caractérisé en ce que** le panneau photovoltaïque (2) comprend un film de cellules photovoltaïques assemblé à au moins une plaque, le panneau photovoltaïque reposant par sa plaque sur les bossages longitudinaux (11) et les bossages transversaux (12), (13).

12. Ensemble selon la revendication 10 ou 11, **caractérisé en ce que** le panneau photovoltaïque (2) est fixé par collage sur les bossages longitudinaux (11) et les bossages transversaux (12, 13).

13. Toiture **caractérisée en ce qu'**elle comprend au moins un ensemble selon l'une des revendications 10 à 12, ledit ensemble étant disposé entre deux chevrons (3) et fixé par les deux ailes de fixation (10) de son dispositif support auxdits chevrons.

14. Toiture selon la revendication 13, **caractérisée en ce qu'**elle comprend au moins deux ensembles placés l'un à côté de l'autre et au moins une pièce de recouvrement (5) destinée à coiffer les deux ailes (10) voisines des dispositifs supports des deux ensembles montées sur le même chevron, la ligne de séparation entre les deux ensembles placés l'un à côté de l'autre s'étendant selon la direction d'élongation du chevron.

15. Toiture selon la revendication 13 ou 14, **caractérisée en ce qu'**elle comprend au moins deux ensembles comprenant chacun un dispositif support selon la revendication 8, lesdits deux ensembles étant placés en colonne entre les deux mêmes chevrons, un premier ensemble étant placé au dessus d'un deuxième ensemble, le bossage transversal d'extrémité inférieure du dispositif support du premier ensemble recouvrant sur le rebord supérieur (15) du dispositif support du deuxième ensemble.

## Patentansprüche

1. Trägervorrichtung von mindestens einem Photovoltaikpaneel (2) auf einem Dach, umfassend:
- eine Grundebene (1), die sich zwischen zwei Befestigungsflügeln (10) erstreckt;
- Trägermittel (11), (12), (13), (14) des oder der Photovoltaikpaneele (2), die sich in Bezug auf die Grundebene (1) erhöht erstrecken, um ein Luftvolumen (V) zwischen der Grundebene (1) und dem oder den Photovoltaikpaneelen (2) zu belassen, wobei die Trägermittel (11), (12), (13), (14) Lufteinlass-/auslassmittel (110), (111) aufweisen, die eine Luftzirkulation in dem Luftvolumen (V) ermöglichen, wobei die Trägermittel umfassen
- mindestens zwei Quererhebungen (12), (13), von denen eine als Erhebung am unteren Ende (13) bezeichnet wird und die andere als Erhebung am oberen Ende (12) bezeichnet wird, und
- mindestens zwei Längserhebungen (11), die sich in der Nachbarschaft der Flügel (10) erstrecken,
wobei die Vorrichtung **dadurch gekennzeichnet ist, dass** mindestens eine der Längserhebungen von der Quererhebung am unteren Ende (13) beabstandet ist, um einen ersten Luftdurchlass (111) am unteren Abschnitt der Trägervorrichtung zu belassen, wobei ein zweiter Luftdurchlass in analoger Weise am oberen Abschnitt des Trägers belassen ist, wobei die Lufteinlass-/auslassmittel die Luftdurchlässe (111) umfassen,
wobei die Längserhebungen und/oder die Quererhebungen eine Auflageebene definieren, auf der das Photovoltaikpaneel befestigt werden kann,
wobei die Flügel (10) und die Längserhebungen (11) zu zweit eine Rinne (102) belassen.

2. Trägervorrichtung von mindestens einem Photovoltaikpaneel gemäß Anspruch 1, **dadurch gekennzeichnet, dass** sich die Längserhebungen (11) bis zur Quererhebung am oberen Ende (12) erstrecken, wobei mindestens eine der Längserhebungen (11) eine Querschnittsverringerung in der Nachbarschaft der Quererhebung am oberen Ende (12) aufweist, um am oberen Abschnitt der Trägervorrichtung einen Luftdurchlass (110) zu belassen, wobei die Lufteinlass-/auslassmittel den Luftdurchlass (110) umfassen.

3. Trägervorrichtung von mindestens einem Photovoltaikpaneel gemäß Anspruch 1 oder 2, **dadurch gekennzeichnet, dass** sie aus einem einstückigen Teil besteht, das aus einem Verbundmaterial ausgeführt ist und mindestens die Grundebene (1), die Flügel (10) und die Trägermittel (11), (12), (13), (14) zusammenfasst.

4. Trägervorrichtung von mindestens einem Photovoltaikpaneel gemäß Anspruch 3, **dadurch gekennzeichnet, dass** sie aus einer Mischung aus Glasfasern und Polyesterharz ausgeführt ist.

5. Trägervorrichtung von mindestens einem Photovoltaikpaneel gemäß einem der Ansprüche 1 bis 4, **dadurch gekennzeichnet, dass** die Trägermittel mindestens eine Zwischen-Quererhebung (14) zwischen den Quererhebungen (13), (12) am unteren Ende und am oberen Ende umfassen.

6. Trägervorrichtung von mindestens einem Photovoltaikpaneel gemäß Anspruch 5, **dadurch gekennzeichnet, dass** die Zwischen-Quererhebung (14) mindestens eine Aussparung (140) aufweist, die einen Luftdurchlass bildet.

7. Trägervorrichtung von mindestens einem Photovoltaikpaneel gemäß einem der Ansprüche 1 bis 6, **dadurch gekennzeichnet, dass** die Erhebungen (11), (12), (13) mindestens eine Naht (112), (120), (130) enthalten, die sich über die Länge der Erhebungen erstreckt.

8. Trägervorrichtung von mindestens einem Photovoltaikpaneel gemäß einem der Ansprüche 1 bis 7, **dadurch gekennzeichnet, dass** sie eine obere Kante (15) umfasst, wobei die Quererhebung am unteren Ende (13) in der Lage ist, in Überlappung der oberen Kante (15) einer anderen Trägervorrichtung zu gehen, die auf dem Dach an einer gleichen Spalte von Trägervorrichtungen wie die Trägervorrichtung angeordnet ist.

9. Trägervorrichtung von mindestens einem Photovoltaikpaneel gemäß Anspruch 8, **dadurch gekennzeichnet, dass** die obere Kante (15) und die Quererhebung (12) am oberen Ende eine Querrinne (106) belassen, die an den zwei Rinnen (102) mündet, die von den Befestigungsflügeln (10) und den Längserhebungen (11) belassen werden.

10. Baugruppe, **dadurch gekennzeichnet, dass** sie umfasst
- eine Trägervorrichtung eines Photovoltaikpaneels (2) gemäß einem der Ansprüche 1 bis 9, und
- ein Photovoltaikpaneel (2), das auf den Längs-(11) und Quererhebungen (12), (13) befestigt ist.

11. Baugruppe gemäß Anspruch 10, **dadurch gekennzeichnet, dass** das Photovoltaikpaneel (2) eine Schicht aus Photovoltaikzellen umfasst, die mit mindestens einer Platte verbunden ist, wobei das Photovoltaikpaneel mit seiner Platte auf den Längserhebungen (11) und den Quererhebungen (12), (13) ruht.

12. Baugruppe gemäß Anspruch 10 oder 11, **dadurch gekennzeichnet, dass** das Photovoltaikpaneel (2) durch Verkleben auf den Längserhebungen (11) und den Quererhebungen (12, 13) befestigt ist.

13. Dach, **dadurch gekennzeichnet, dass** es mindestens eine Baugruppe gemäß einem der Ansprüche 10 bis 12 umfasst, wobei die Baugruppe zwischen zwei Sparren (3) angeordnet und über die zwei Befestigungsflügel (10) seiner Trägervorrichtung an den Sparren befestigt ist.

14. Dach gemäß Anspruch 13, **dadurch gekennzeichnet, dass** es mindestens zwei Baugruppen umfasst, die nebeneinander platziert sind, und mindestens ein Überlappungsteil (5), das dazu bestimmt ist, die zwei benachbarten Flügel (10) der Trägervorrichtungen der zwei Baugruppen, die auf dem gleichen Sparren montiert sind, abzudecken, wobei sich die Trennlinie zwischen den zwei nebeneinander platzierten Baugruppen gemäß der Ausdehnungsrichtung des Sparrens erstreckt.

15. Dach gemäß Anspruch 13 oder 14, **dadurch gekennzeichnet, dass** es mindestens zwei Baugruppen umfasst, die jede eine Trägervorrichtung gemäß Anspruch 8 umfassen, wobei die zwei Baugruppen in Spalte zwischen den zwei gleichen Sparren platziert sind, wobei eine erste Baugruppe oberhalb einer zweiten Baugruppe platziert ist, wobei die Quererhebung am unteren Ende der Trägervorrichtung der ersten Baugruppe auf der oberen Kante (15) der Trägervorrichtung der zweiten Baugruppe überlappt.

## Claims

1. Support device for supporting at least one photovoltaic panel (2) on a roof comprising:
- a base surface (1) extending between two fixing wings (10);
- support means (11, 12, 13, 14) for supporting said photovoltaic panel or panels (2) extending in elevation with respect to said base surface (1) so as to form a volume of air (V) between said base surface (1) and said photovoltaic panel or panels (2), said support means (11, 12, 13, 14) having air inlet/outlet means (110, 111) enabling air to circulate in said air volume (V), said support means comprising
- at least two transverse protrusions (12, 13), one referred to as the bottom end protrusion (13) and the other referred to as the top end protrusion (12), and
- at least two longitudinal protrusions (11) extending in the vicinity of said wings (10),
the support device being **characterized in that** at least one of said longitudinal protrusions is distant from said bottom end transverse protrusion (13) to provide a first air passage (111) at the bottom part of the support device, a second air passage being provided in a similar way at the top part of the support device, said air inlet/outlet means comprising said air passages (111),
the longitudinal protrusions and/or the transverse protrusions defining a bearing plane on which the photovoltaic panel can be fixed,
said wings (10) and said longitudinal protrusions (11) form in pairs a gutter (102).

2. Support device for supporting at least one photovoltaic panel according to claim 1, **characterised in that** said longitudinal protrusions (11) extend as far as the top end transverse protrusion (12), at least one of said longitudinal protrusions (11) having a reduction in cross section in the vicinity of said top end transverse protrusion (12) in order to provide an air passage (110) at the top part of the support device, said air inlet/outlet means comprising said air passages (110).

3. Support device for supporting at least one photovoltaic panel according to claim 1 or 2, **characterised in that** it consists of a single piece produced from a composite material and grouping together at least said base surface (1), said wings (10) and said support means (11, 12, 13, 14).

4. Support device for supporting at least one photovoltaic panel according to claim 3, **characterised in that** it is produced from a mixture of glass fibres and polyester resin.

5. Support device for supporting at least one photovoltaic panel according to any one of claims 1 to 4, **characterised in that** said support means comprise at least one intermediate transverse protrusion (14) between said bottom end and top end transverse protrusions (13, 12).

6. Support device for supporting at least one photovoltaic panel according to claim 5, **characterised in that** said intermediate transverse protrusion (14) has at least one recess (140) forming an air passage.

7. Support device for supporting at least one photovoltaic panel according to any one of claims 1 to 6, **characterised in that** said protrusions (11, 12, 13) carry at least one bead (112, 120, 130) extending over the length of said protrusions.

8. Support device for supporting at least one photovoltaic panel according to any one of claims 1 to 7, **characterised in that** it comprises a top rim (15), said bottom end transverse protrusion (13) being able to come to overlap the top rim (15) of another support device placed on the roof on a same column of support devices as said support device.

9. Support device for supporting at least one photovoltaic panel according to claim 8, **characterised in that** said top rim (15) and the top end transverse protrusion (12) form a transverse gutter (106) emerging on the two gutters (102) formed by said fixing wings (10) and said longitudinal protrusions (11).

10. Assembly **characterised in that** it comprises
- a support device for supporting a photovoltaic panel (2) according to one of the claims 1 to 9,
and
- a photovoltaic panel (2) fixed to the longitudinal (11) and transverse protrusions (12, 13), so that a volume of air (V) is formed between said base surface (1) and said photovoltaic panel (2), said support means (11, 12, 13, 14) having air inlet/outlet means (110, 111) enabling air to circulate in said volume of air (V).

11. Assembly according to claim 10, **characterised in that** the photovoltaic panel (2) comprises a film of photovoltaic cells assembled on at least one plate, the photovoltaic panel resting through its plate on the longitudinal protrusions (11) and transverse protrusions (12, 13).

12. Assembly according to claim 10 or 11, **characterised in that** the photovoltaic panel (2) is fixed by adhesive bonding to the longitudinal protrusions (11) and the transverse protrusions (12, 13).

13. Roof, **characterised in that** it comprises at least one assembly according to one of claims 10 to 12, said assembly being disposed between two rafters (3) and fixed by the two fixing wings (10) of its support device to said rafters.

14. Roof according to claim 13, **characterised in that** it comprises at least two assemblies placed alongside each other and at least one overlap piece (5) intended to fit on top of the two adjoining wings (10) of the support devices of the two assemblies mounted on the same rafter, the separation line between the two assemblies placed alongside each other extending in the direction of elongation of the rafter.

15. Roof according to claim 13 or 14, **characterised in that** it comprises at least two assemblies each comprising a support device according to claim 8, said two assemblies being placed in a column between the same two rafters, a first assembly being placed above a second assembly, the bottom end transverse protrusion of the support device of the first assembly overlapping the top rim (15) of the support device of the second assembly.
